# EUROPÄISCHE PATENTANMELDUNG

(11) **EP 1 956 752 A1**
(43) Veröffentlichungstag der Anmeldung: **13.08.2008**
(21) Anmeldenummer: 07002751.1
(22) Anmeldetag: 08.02.2007
(51) Int. Cl.: H04L 12/26

(54) **Protokolltester mit Expertensystem für Telekommunikationsnetze**

(71) Anmelder: Tektronix International Sales GmbH, 8212 Neuhausen (CH)
(72) Erfinder: Wagner, Ute, 14669 Ketzin (DE); Laake, Heinz-Joachim, 16727 Oberkrämer (DE); Schoenfeld, Christian, 12205 Berlin (DE); Klopfer, Armin, 14624 Dallgow (DE)
(74) Vertreter: Schurack, Eduard F.

(57) **Zusammenfassung**

Die vorliegende Erfindung betrifft ein Verfahren zum Analysieren einer zwischen mindestens zwei Instanzen eines Telekommunikationsnetzes ablaufenden Kommunikation, folgende Schritte umfassend: a) Ermitteln von Kennzahlen für eine Vielzahl von Parametern durch Überwachung der zwischen den mindestens zwei Instanzen ablaufenden Kommunikation; gekennzeichnet durch folgende weiteren Schritte: b) Anwenden zumindest einer ersten Rechenvorschrift auf die Kennzahlen von mindestens zwei Parametern zur Erzeugung zumindest eines ersten Analysewerts als Ergebnis der zumindest ersten Rechenvorschrift; c) Abbilden zumindest des ersten Analysewerts auf einen zumindest dem ersten Analysewert zugeordneten Wertebereich, der mindestens zwei Teilbereiche aufweist, zur Ermittlung des Teilbereichs, in dem zumindest der erste Analysewert liegt; und d) Ermitteln einer dem ermittelten Teilbereich zugeordneten Expertenaussage. Sie betrifft überdies einen entsprechenden Protokolltester 10.

## Beschreibung

Die vorliegende Erfindung betrifft ein Verfahren zum Analysieren einer zwischen mindestens zwei Instanzen eines Telekommunikationsnetzes ablaufenden Kommunikation, bei dem zunächst Kennzahlen für eine Vielzahl von Parametern durch Überwachung der zwischen den mindestens zwei Instanzen ablaufenden Kommunikation ermittelt werden. Sie betrifft überdies einen Protokolltester zum Analysieren einer zwischen mindestens zwei Instanzen eines Telekommunikationsnetzes ablaufenden Kommunikation, der eine Vorrichtung zum Ermitteln von Kennzahlen für eine Vielzahl von Parametern der zwischen den mindestens zwei Instanzen ablaufenden Kommunikation umfasst.

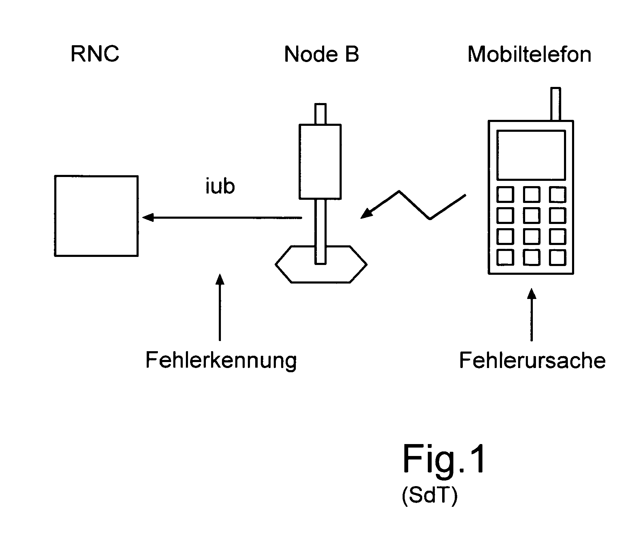

Zur Erläuterung der der vorliegenden Erfindung zugrunde liegenden Problematik, wird zunächst auf die Fig. 1 Bezug genommen, die einen aus dem Stand der Technik bekannten Abschnitt eines UTRAN (UMTS Terrestrial Radio Access Network) zeigt. Sie zeigt insbesondere ein Mobiltelefon, das über eine Node B mit einem RNC (Radio Network Controller) verbunden ist. Dabei wird die Verbindung zwischen einer Node B und dem übergeordneten RNC als lub-Schnittstelle bezeichnet. Netzwerkbetreiber überwachen zur Feststellung von Fehlfunktionen und potentiellen Problemen des Telekommunikationsnetzwerks häufig die an einer Schnittstelle des Telekommunikationsnetzwerks übertragenen Daten. Bei dem in Fig. 1 dargestellten Beispiel kommt die lub-Schnittstelle in Betracht. Dabei werden Kennzahlen für eine Vielzahl von Parametern zur Überwachung der Kommunikation an der lub-Schnittstelle ermittelt. Derartige Kennzahlen sind insbesondere statistische Werte, zum Beispiel die Anzahl der fehlerhaften Übertragungen, die Verteilung der benutzten Sendeleistungen etc.

Aus diesen Kennzahlen muss nun ein Mitarbeiter eines derartigen UTRAN- oder beispielsweise auch eines GERAN-Netzwerkbetreibers die genannten Fehlfunktionen und potentiellen Probleme des Telekommunikationsnetzwerks lokalisieren. Problematisch dabei sind mehrere Aspekte:
Zum einen werden üblicherweise die Kennzahlen von mehreren tausend Parametern ermittelt und dem Mitarbeiter bereitgestellt. Dies ist zum einen schon eine schier unüberschaubare Datenmenge. Zum anderen ist es häufig so, dass zwar in den an einer Schnittstelle überwachten Daten ein Fehler festgestellt wurde, die Fehlerursache jedoch nicht in einer der zwei Instanzen, die diese Schnittstelle definieren, zu finden ist. Bei dem in Fig. 1 dargestellten Beispiel wurde der Fehler an der lub-Schnittstelle entdeckt, während die tatsächliche Fehlerursache in dem Mobiltelefon vorliegt. Einen derartigen Fehler durch Sichtung und Analyse der an der lub-Schnittstelle aufgezeichneten Daten zu lokalisieren, ist nur wenigen Experten vorbehalten und selbst für diese nur unter größtem Zeitaufwand, wenn überhaupt, möglich. Derartige Experten zeichnen sich durch umfangreiche Kenntnis der entsprechenden Netzwerkspezifikationen, der Netzwerkstruktur, der Bedienung der zugehörigen Messtechnik und dergleichen aus. Im Stand der Technik müssen solche Experten nach Abschluss einer Messung die IstWerte der ermittelten Parameter, d. h. die Kennzahlen, mit vorgegebenen Sollwerten vergleichen. Anhand dieser Vergleiche, den gültigen Standards und ihrem Erfahrungsschatz können dann die Experten häufig Vermutungen anstellen, welche Art von Problemen in dem betreffenden Kommunikationsnetzwerk vorliegen könnte.

Der vorliegenden Erfindung liegt deshalb die Aufgabe zugrunde, den eingangs genannten Protokolltester bzw. das eingangs genannte Verfahren derart weiterzubilden, dass selbst weniger kundigen Benutzern eine Lokalisierung von Fehlfunktionen und potentiellen Probleme von Telekommunikationsnetzwerken schnell und ohne umfangreiches Detailwissen ermöglicht wird.

Diese Aufgaben werden gelöst durch ein Verfahren mit den Merkmalen von Patentanspruch 1 und durch einen Protokolltester mit den Merkmalen von Patentanspruch 8.

Die vorliegende Erfindung basiert auf der Erkenntnis, dass sich eine Fehlfunktion in dem Telekommunikationsnetz häufig nicht nur in den Kennzahlen eines Parameters widerspiegelt, sondern in den Kennzahlen mehrerer Parameter. Da es für einen unkundigen Mitarbeiter äußerst schwierig ist, aus der sehr hohen Zahl von Parametern die relevanten Parameter herauszusuchen und in einer Zusammenschau zu betrachten, werden bereits vorab entsprechende Rechenvorschriften für die Kennzahlen von jeweils mindestens zwei Parametern definiert, so dass als Ergebnis der Rechenvorschrift nur noch ein Analysewert vorliegt. Da für einen unkundigen Benutzer ein derartiger Analysewert häufig ohne Aussagewert ist, geht die vorliegende Erfindung noch weiter:
Sie bildet diesen Analysewert auf einen zugehörigen Wertebereich ab, wobei der Wertebereich mehrere Teilbereiche aufweist. Dabei wird der Teilbereich ermittelt, in dem der Analysewert liegt. Anschließend wird aus einer Tabelle eine Expertenaussage, ausgelesen, die dem Teilbereich zugeordnet ist, und in eine Ergebnisdatei eingetragen oder dem Benutzer zur Anzeige gebracht. Bevorzugt besteht eine Expertenaussage aus einer Bewertung und einem Kommentar, der Hinweise und/oder Lösungsvorschläge zu dem (gegebenenfalls) bestehenden Problem enthält.

Erst durch die zweistufige Vorgehensweise gemäß der vorliegenden Erfindung, d. h. zunächst Anwenden einer Rechenvorschrift auf die Kennzahlen mehrerer Parameter und anschließend Abbilden des bei der Anwendung der Rechenvorschrift ermittelten Analysewerts auf einen Wertebereich zur Ermittlung eines Teilbereichs, dem eine Expertenaussage zugeordnet ist, lassen sich die aus den riesigen, an einer Schnittstelle eines Telekommunikationsnetzwerks anfallenden Datenmengen wertvolle Hinweise auf die Ursachen von Fehlfunktionen oder potentiellen Problemen ableiten.

Durch die vorliegende Erfindung wird nunmehr nicht nur einer Handvoll hochspezialisierter und teurer Experten die Suche nach Problemen in einem Telekommunikationsnetzwerk ermöglicht, sondern auch Mitarbeitern mit deutlich niedrigerem Kenntnisstand. Dadurch lassen sich Probleme viel schneller ermitteln und Gegenmaßnahmen einleiten, was in zuverlässigeren Netzwerken und deutlich geringeren Betriebskosten resultiert. Durch die vorliegende Erfindung können unmittelbare Hinweise auf konkrete Fehler oder potentielle Probleme des untersuchten Telekommunikationsnetzwerks gegeben werden. Diese Fehlerhinweise lassen sich von einem Benutzer ohne umfangreiches Detailwissen verwenden, um gezielte Maßnahmen zur Fehlerbeseitigung zu ergreifen.

Bei einer bevorzugten Ausführungsform wird in Schritt c) weiterhin mindestens eine Kennzahl eines Parameters auf einen Wertebereich abgebildet, der mindestens zwei Teilbereiche aufweist, zur Ermittlung des Teilbereichs, in dem die mindestens eine Kennzahl des Parameters liegt, wobei in Schritt d) eine Expertenaussage ermittelt wird, die den mindestens zwei ermittelten Teilbereichen zugeordnet ist. Durch diese Maßnahme lassen sich nicht nur durch Rechenvorschriften verknüpfte Kennzahlen von Parametern zur Abfrage von Expertenaussagen verwenden, sondern auch Rechenvorschriften und Kennzahlen von Parametern, wobei letztere keiner Rechenvorschrift unterzogen worden. Durch Abfrage mehrdimensionaler Expertenaussagen dadurch, dass zwei oder mehr ermittelte Teilbereiche als Abfrageparameter verwendet werden, lassen sich bei der Vielzahl von an der Schnittstelle ermittelten Parametern noch konkretere Hinweise auf Fehlerursachen formulieren.

Besonders bevorzugt werden in Schritt b) zumindest zwei Rechenvorschriften auf die Kennzahlen von mindestens zwei Parametern angewendet, wobei mindestens zwei Analysewerte erzeugt werden, wobei in Schritt c) die mindestens zwei Analysewerte auf zugeordnete Wertebereiche zur Ermittlung der Teilbereiche, in dem der jeweilige Analysewert liegt, abgebildet werden, wobei in Schritt d) eine Expertenaussage ermittelt wird, die den mindestens zwei ermittelten Teilbereichen zugeordnet ist. Diese Maßnahme kann ergänzt werden durch die zuvor beschriebene bevorzugte Ausführungsform, bei der mindestens eine Kennzahl eines Parameters auf einen Wertebereich abgebildet wird und der dabei ermittelte Teilbereich zur Ermittlung der relevanten Expertenaussage berücksichtigt wird. Eine derartige Vorgehensweise ermöglicht eine Vielzahl von Rechenvorschriften vorzusehen, wobei sich dadurch die Signifikanz erhöhen lässt. D. h. durch Heranziehen mehrerer Rechenvorschriften und/oder Kennzahlen zur Ermittlung einer Expertenaussage lassen sich klarere Abgrenzungen betreffend den potentiell vorliegenden Fehler gewinnen. Mit andern Worten: Im Hinblick auf die vorliegende Fehlfunktion gehen unrelevante Verknüpfungen mehrerer Rechenvorschriften im "Rauschen" der Aussagen unter. Nur die im vorliegenden Fehlerfall vernünftige Verknüpfung diverser Parameter durch mehrere Rechenvorschriften liefert eine klare Expertenaussage.

Bevorzugt umfasst das erfindungsgemäße Verfahren weiterhin einen Schritt des Definierens mindestens einer Rechenvorschrift für die Kennzahlen von jeweils mindestens zwei Parametern. Derartige Rechenvorschriften werden insbesondere in Rücksprache mit Experten vorgenommen. Dies trifft überdies auf einen weiteren optionalen Schritt zu, nämlich dem Zuordnen eines Wertebereichs und von Teilbereichen des Wertebereichs für das Ergebnis der mindestens einen Rechenvorschrift und/oder für die Kennzahlen mindestens eines Parameters. Experten werden ebenfalls benötigt, um Expertenaussagen entsprechend den Teilbereichen zu ermitteln, insbesondere Expertenaussagen, die mindestens zwei Teilbereiche betreffen. Bevorzugt werden die Experten weiterhin hinzugezogen, um die Expertenaussagen zu den Teilbereichen zuzuordnen.

Die Schritte, die das Hinzuziehen von Experten erfordern, werden bevorzugt herstellerseitig vorgenommen. D. h. mit einem erfindungsgemäßen Protokolltester wird eine Sammlung der wichtigsten Rechenvorschriften, Teilbereiche und Expertenaussagen ausgeliefert, die in so genannten Skripten zusammengefasst sind. Diese sind mit einem Dateinamen gekennzeichnet, so dass der Anwender einen klaren Überblick hat über die in seinem Protokolltester vorhandenen Skripte. Es kann jedoch auch vorgesehen sein, dass ein kundiger Benutzer eines erfindungsgemäßen Protokolltesters die Möglichkeit hat, ein entsprechendes Skript selbst zu kreieren und der Sammlung von Skripten auf seinem Protokolltester hinzuzufügen.

Die mit Bezug auf das erfindungsgemäße Verfahren erwähnten bevorzugten Ausführungsformen und deren Vorteile gelten, soweit anwendbar, für den erfindungsgemäßen Protokolltester. Dabei sind für die in Betracht kommenden Verfahrensschritte entsprechende Vorrichtungen in dem erfindungsgemäßen Protokolltester vorgesehen, wobei diese im Wesentlichen als Computerprogramme, die auf einem entsprechenden Prozessor in dem Protokolltester lauffähig sind, vorliegen.

Im Nachfolgenden wird nunmehr ein Ausführungsbeispiel eines erfindungsgemäßen Verfahrens und eines erfindungsgemäßen Protokolltesters unter Bezugnahme auf die beigefügten Zeichnungen näher beschrieben. Es zeigen:
- Fig. 1: einen aus dem Stand der Technik bekannten Abschnitt eines UTRAN-Telekommunikationsnetzwerks;
- Fig. 2: in schematischer Ansicht den Aufbau eines erfindungsgemäßen Protokolltesters; und
- Fig. 3: in schematischer Darstellung ein Signalflussdiagramm für ein Ausführungsbeispiel eines erfindungsgemäßen Verfahrens.

Der Anhang A1 zeigt beispielhaft ein Skript zur Sendeleistungsanalyse auf dem allgemeinen Funkkanal (RACH) eines UTRAN-Netzwerks.

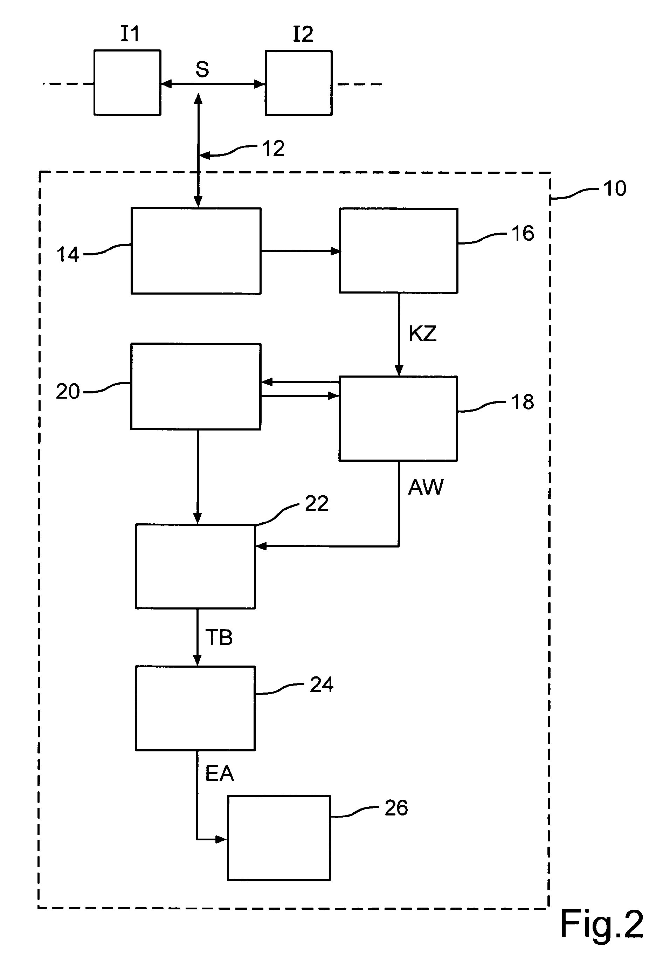

Fig. 2 zeigt in schematischer Darstellung den Aufbau eines erfindungsgemäßen Protokolltesters 10. Dieser ist über eine Leitung 12 mit einer Schnittstelle S zwischen zwei Instanzen 11, 12 eines Telekommunikationsnetzwerks gekoppelt, um die zwischen diesen Instanzen ablaufende Kommunikation aufzuzeichnen. Der Protokolltester 10 umfasst eine Einheit 14, die ausgelegt ist, die an der Schnittstelle S aufgezeichneten Daten aufzubereiten, beispielsweise in Pakete aufzutrennen, unrelevante Daten zu beseitigen und dergleichen. Die Einheit 14 stellt die aufbereiteten Daten einer Verarbeitungsvorrichtung 16 zur Verfügung, die daraus die Kennzahlen für eine Vielzahl von Parametern ermittelt. Diese Kennzahlen werden einer Rechenvorrichtung 18 bereitgestellt, die aus einem Speicher 20 Rechenvorschriften lädt, um die von der Verarbeitungsvorrichtung 16 bereitgestellten Kennzahlen gemäß der Rechenvorschrift zu verarbeiten. Als Ergebnis stellt die Rechenvorrichtung 18 einen Analysewert an eine Look-Up-Tabelle 22 bereit, in der der Analysewert auf einen Wertebereich, der der Rechenvorschrift zugeordnet ist und der mindestens zwei Teilbereiche aufweist, abgebildet wird, um den Teilbereich zu ermitteln, in dem der Analysewert liegt. Dieser Teilbereich wird an eine weitere Look-Up-Tabelle 24 angelegt, in der den Teilbereichen Expertenaussagen zugeordnet sind. Die für den ermittelten Teilbereich einschlägige Expertenaussage wird auf einer Anzeigeeinheit 26 angezeigt.

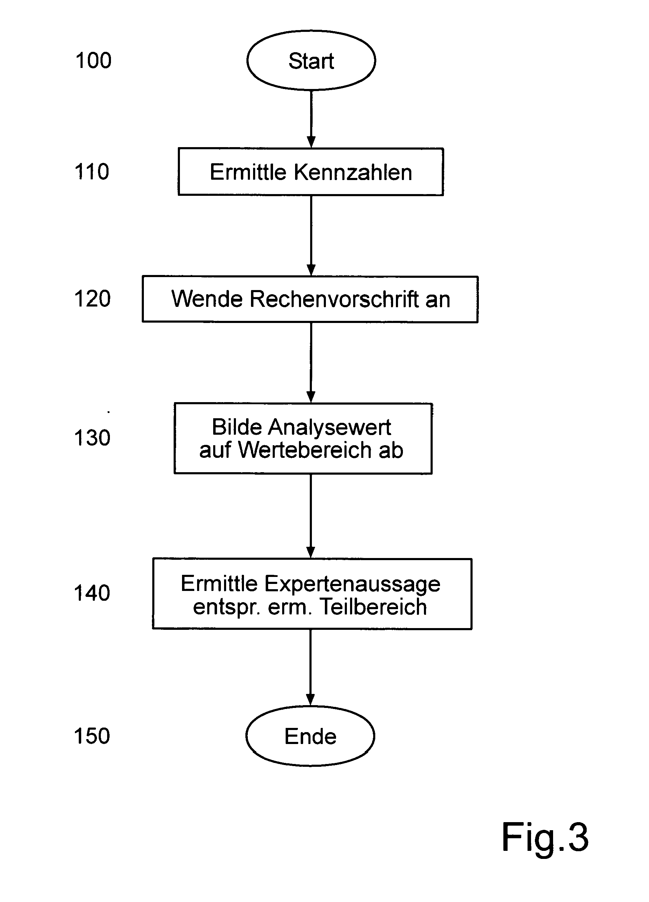

Fig. 3 zeigt den Signalflussgraphen eines einfachen Ausführungsbeispiels eines erfindungsgemäßen Verfahrens. Dieses Verfahren beginnt in Schritt 100, wobei in Schritt 110 zunächst die Kennzahlen ermittelt werden. Auf diese werden im Schritt 120 Rechenvorschriften angewendet, die einen Analysewert liefern. Dieser Analysewert wird im Schritt 130 auf einen Wertebereich abgebildet, um einen, dem Analysewert zugeordneten Teilbereich zu ermitteln. Im Schritt 140 wird die dem ermittelten Teilbereich zugeordnete Expertenaussage ermittelt. Das Verfahren endet im Schritt 150.

Zurückkommend auf das in Fig. 1 dargestellte Beispiel, könnte eine Anwendung des erfindungsgemäßen Verfahrens folgendermaßen aussehen: Zunächst wird ein Fehler an der lub-Schnittstelle erkannt. In einem erfindungsgemäßen Protokolltester 10, der mit der lub-Schnittstelle verbunden ist, werden folgende Schritte ausgeführt: Zunächst wird die Anzahl der Nachrichtenübertragungen mit Prüfsummenfehler an der lub-Schnittstelle zwischen der Antenne (Node B) und der Vermittlungsstelle (RNC) ermittelt. Ebenfalls ermittelt wird die Anzahl der Nachrichtenübertragungen ohne Prüfsummenfehler an dieser Schnittstelle. Dann wird der Quotient beider Werte ermittelt, der als Analysewert zur Verfügung steht. Anschließend wird dieser Analysewert auf einen Wertebereich abgebildet, der zwei Teilbereiche aufweist, die durch einen Schwellwert voneinander getrennt sind. Liegt der ermittelte Analysewert unter dem Schwellwert, so ist vorliegend der erste Teilbereich maßgeblich. In einer Look-Up-Tabelle ist diesem ersten Teilbereich die Expertenaussage zugeordnet: "Mögliche Fehlerursache: zu geringe Sendeleistung des Mobiltelefons! Gegenmaßnahme: Sendeleistung (Loop Control) des mobilen Endgeräts erhöhen!".

Im Anhang A1 ist beispielhaft ein Skript zur Sendeleistungsanalyse auf dem allgemeinen Funk-Kanal (RACH) eines UMTS-Netzwerks wiedergegeben. Hierzu einige Erläuterungen:
Zunächst werden einige Variablen eingeführt, die dann in den Zeilen 20 bis 27 zur Spezifierung eines Speicherplatzes dienen, an dem die benötigten Kennzahlen ausgelesen werden.

Die Abkürzung "FP" in Zeile 4 bedeutet FramingProtokoll, d. h. das Protokoll für die unterste Kommunikationsschicht im OSI-Modell. Gemäß Zeile 6 wird die Variable protokollname ="FP" gesetzt.

Die Abkürzung "CRC" in Zeile 8 bedeutet Cyclic Redundancy Check, was so viel heißt wie "zyklische Redundanzprüfung". Sie liefert eine Prüfsumme.

In Zeile 10 wird der Variablen statistikName die Bezeichnung "CRC Indicator" zugewiesen.

Gemäß Zeilen 12 bis 14 betrifft die Bezeichnung "FP DATA RACH" die Daten des FramingProtokolls auf dem Random Access Channel, welcher ein Funk-Kanal ist, auf dem alle Mobiltelefone senden dürfen, beispielsweise zur Anmeldung.

Gemäß Zeile 15 wird der Variablen wertName die Bezeichnung "FP DATA RACH" zugewiesen.

In Zeile 17 wird der Variablen wertAusprägungPrüfsummeKorrekt die Bezeichnung "Correct" zugewiesen, während in Zeile 18 der Variablen wertAusprägungPrüfsumme-NichtKorrekt die Bezeichnung "Not Correct" zugewiesen wird. Damit werden die konkreten Ausprägungen der Kennzahlen definiert, die zur nachfolgenden Analyse verwendet werden sollen. Die bisher erwähnten Zeilen dienen lediglich der besseren Lesbarkeit. Die Bezeichnungen, beispielsweise "Correct und "Not Correct", könnten auch direkt in den Funktionsaufrufen HoleStatistikWert(...) eingetragen sein.

Gemäß Zeile 20 wird nun auf der Basis der vorher definierten Variablen für die Ermittlung der Kennzahl anzahlPrüfsummenKorrekt, d. h. die Anzahl der Übertragungen, bei denen die Prüfsumme korrekt war, diejenige Zahl über eine Programmierschnittstelle beschafft, die hinter der Bezeichnung HoleStatistikWert abgespeichert ist, vorliegend protokollname, statistikName, wertName, wertAusprägungPrüfsummeKorrekt.

Entsprechendes gilt gemäß Zeile 24 für die Variable anzahlPrüfsummenNichtKorrekt, wobei hier jedoch die Zahl wertAusprägungPrüfummeNichtKorrekt beschafft wird.

In Zeile 29 wird der Analysewert prozentPrüfsummenNichtKorrekt berechnet gemäß der dargestellten Gleichung, wonach die Anzahl der nichtkorrekten Prüfsummen mit 100 multipliziert wird und durch die Summe der Anzahl der korrekten Prüfsummen und der nichtkorrekten Prüfsummen dividiert wird. Die ausgewerteten Parameter sind die Übertragungen mit nichtkorrekter Prüfsumme und die Übertragungen mit korrekter Prüfsumme.

Die Rechenvorschrift ist in den Zeilen 29 und 30 wiedergegeben, d. h. es wird der Prozentsatz der Übertragungen mit nichtkorrekter Prüfsumme an der Anzahl der Gesamtübertragungen ermittelt, dadurch, dass die entsprechenden Kennzahlen gemäß dieser Vorschrift zur Ermittlung des Analysewerts miteinander verknüpft werden.

Die Zeilen 33 bis 62 des dargestellten Skripts geben die Abbildung auf einen Wertebereich wieder und ermitteln den dem Analysewert zuzuordnenden Teilbereich:

Liegt der Analysewert im Bereich zwischen 0 und 1, dann ist der erste Teilbereich relevant und der Analysewert wird zusammen mit dem Kommentar "Gute Prüfsummen Rate (in %)" wiedergegeben. Überdies wird eine Ergebnisbewertung wiedergegeben, vorliegend "OK" (siehe Zeilen 33 bis 35).

Liegt der Analysewert im Bereich zwischen 1 und 4, also im zweiten Teilbereich, dann wird der Analysewert wiedergegeben zusammen mit der Aussage "Prüfenswerte Prüfsummen Rate (in %)". Als Ergebnis wird überdies eine Warnung ausgegeben sowie eine Beschreibung "RACH Prüfsummenfehler hängen hauptsächlich mit der initialen Sendeleistung des Mobiltelefons (Open Loop Power Control) zusammen. Bitte überprüfen Sie die allgemeinen Sendekanal-Einstellungen (Common Channel Setup: RACH Signatures)." (siehe Zeilen 37 bis 44).

Liegt der Analysewert im Bereich zwischen 4 und 33, also im dritten Teilbereich, dann wird der Hinweis ausgegeben "Fehlerhafte Prüfsummen Rate (in %)" zusammen mit der Aussage "Fehler". Weiterhin wird der Kommentar ausgegeben "RACH Prüfsummenfehler hängen hauptsächlich mit der initialen Sendeleistung des Mobiltelefons (O-pen Loop Power Control) zusammen. Bitte überprüfen Sie die allgemeinen Sendekanal-Einstellungen (Common Channel Setup: RACH Signatures)." (siehe Zeilen 46 bis 53).

Liegt der Analysewert im Bereich zwischen 33 und 100, also im vierten Teilbereich, dann wird der Hinweis ausgegeben "Kritische Prüfsummen Rate (in %)" zusammen mit dem Hinweis "KritischerFehler" und dem Kommentar "RACH Prüfsummenfehler hängen hauptsächlich mit der initialen Sendeleistung des Mobiltelefons (Open Loop Power Control) zusammen. Bitte überprüfen Sie die allgemeinen Sendekanal-Einstellungen (Common Channel Setup: RACH Signatures)." (siehe Zeilen 55 bis 62).

Die Zeilen 64 und 65 enthalten einen Verweis auf die Messdaten, welche zu den entsprechenden Aussagen geführt haben. Dieser Verweis ist für alle vier Teilbereiche identisch.

Die Zeilen 67 und 68 dienen zum Speichern des ermittelten Ergebnisses mit der zugehörigen Expertenaussage und dem Verweis.

In Zeile 70 wird das Skript beendet.

Folgende weitere Erläuterungen:
Die von der Programmierschnittstelle ausgeführten Funktionen in dem Skript im Anhang A1 sind die Folgenden:
HoleStatistikWert(...): Auslesen einer einzelnen Kennzahl. Diese Kennzahl ist durch die angegebenen Funktionsparameter charakterisiert. Diese Funktion gehört zur Programmierschnittstelle für die Bereitstellung der Kennzahlen und ist in Fig. 2 durch den Pfeil zwischen den Vorrichtungen 16 und 18 dargestellt.
FügeAnalyseErgebnisHinzu(...): Speichern einer einzelnen Expertenaussage. Durch mehrmaliges Aufrufen dieser Funktion mit unterschiedlichen Funktionsparametern können beliebig viele Expertenaussagen gespeichert werden. Diese Funktion gehört zur Programmierschnittstelle für die Verwaltung von Expertenaussagen und ist in Fig. 2 durch den Pfeil zwischen den Vorrichtungen 22 und 24 dargestellt.

In dem Skript von Anhang A1 wird demnach der Benutzer unterstützt bei den folgenden Fragen:
a) Welche Werte müssen zur Analyse herangezogen werden? ("FP", "CRC Indicator", "FP DATA RACH", "Not Correct"/"Correct").
b) Was muss mit diesen Werten passieren (Rechenvorschrift)? (Prozentrechnung)
c) Wie sind die Ergebnisse zu interpretieren? (Wertebereiche und deren Bewertung)
d) Schlussfolgerungen, die für Nicht-Experten nicht ersichtlich sind (vorliegend die Anmerkungen ergebnisBeschreibung)
e) Referenzen auf Analyse-Details für weiterführende Untersuchungen (hier: ergebnisReferenz; es können beliebig viele angegeben werden - auch Internet-Links)

### Weitere Anmerkungen:

Die Erweiterung durch das Hinzufügen und Registrieren weiterer Skripte ist jederzeit möglich. Die Durchführung der Analyse innerhalb eines erfindungsgemäßen Protokolltesters geschieht vollkommen automatisch und erfordert keine Benutzerinteraktion. Mittels der Programmierschnittstellen können die Rechenvorschriften auf die Kennzahlen zugreifen. Die ermittelten Ergebnisse, d. h. die Expertenaussagen, geben direkt Hinweise auf Fehler und potentielle Probleme im entsprechenden Telekommunikationsnetzwerk und werden dem Anwender eines erfindungsgemäßen Protokolltesters automatisch angezeigt. Von den angezeigten Ergebnissen kann mittels der zu den Ergebnissen gehörenden Verweise direkt zu den detaillierten Kennzahlen navigiert werden, um weiterführende Untersuchungen zu ermöglichen. In dem Skript von A1 erfolgt die Zuweisung des Verweises zu dem Ergebnis exemplarisch in den Zeilen 64 und 65.

In einer bevorzugten Ausführungsform werden automatisch alle Skripte angewendet, die in dem erfindungsgemäßen Protokolltester zur Verfügung stehen. Es kann eine Gewichtung der Analyseergebnisse vorgenommen werden. Eine typische Anzahl von Rechenvorschriften beträgt 60 bis 100. Die Anzahl der relevanten Parameter, für die Kennzahlen ermittelt werden, beträgt üblicherweise mehrere 1000. In einer durchschnittlichen Rechenvorschrift werden die Kennzahlen von zwei bis fünf, insbesondere von drei Parametern miteinander verknüpft.

Eine besonders bevorzugte Ausführungsform zeichnet sich dadurch aus, dass auf die Ergebnisse mehrerer Skripte eine weitere entsprechende Auswertung vorgenommen wird, wobei wiederum die einzelnen Ergebnisse der Skripte miteinander verknüpft werden, um ein Ergebnis einer nächst höheren Abstraktionsebene zu ermitteln. Beispiel: Drei Skripte liefern ein "OK", ein Skript liefert einen "kritischen Fehler" und ein weiteres Skript eine "Warnung". Die Gesamtaussage unter Berücksichtigung dieser fünf Teilaussagen kann darin bestehen: "Eingeschränkter Betrieb möglich".

## Patentansprüche

1. Verfahren zum Analysieren einer zwischen mindestens zwei Instanzen eines Telekommunikationsnetzes ablaufenden Kommunikation, folgende Schritte umfassend:
a) Ermitteln von Kennzahlen für eine Vielzahl von Parametern durch Überwachung der zwischen den mindestens zwei Instanzen ablaufenden Kommunikation;
**gekennzeichnet durch** folgende weiteren Schritte:
b) Anwenden zumindest einer ersten Rechenvorschrift auf die Kennzahlen von mindestens zwei Parametern zur Erzeugung zumindest eines ersten Analysewerts als Ergebnis der zumindest ersten Rechenvorschrift;
c) Abbilden zumindest des ersten Analysewerts auf einen zumindest dem ersten Analysewert zugeordneten Wertebereich, der mindestens zwei Teilbereiche aufweist, zur Ermittlung des Teilbereichs, in dem zumindest der erste Analysewert liegt; und
d) Ermitteln einer dem ermittelten Teilbereich zugeordneten Expertenaussage.

2. Verfahren nach Anspruch 1,
**dadurch gekennzeichnet,**
**dass** in Schritt c) weiterhin mindestens eine Kennzahl eines Parameters auf einen Wertebereich abgebildet wird, der mindestens zwei Teilbereiche aufweist, zur Ermittlung des Teilbereichs, in dem die mindestens eine Kennzahl des Parameters liegt,
wobei in Schritt d) eine Expertenaussage ermittelt wird, die den mindestens zwei ermittelten Teilbereichen zugeordnet ist.

3. Verfahren nach einem der Ansprüche 1 oder 2,
**dadurch gekennzeichnet,**
**dass** in Schritt b) zumindest zwei Rechenvorschriften auf die Kennzahlen von mindestens zwei Parametern angewendet werden, wobei mindestens zwei Analysewerte erzeugt werden,
wobei in Schritt c) die mindestens zwei Analysewerte auf zugeordnete Wertebereiche zur Ermittlung der Teilbereiche, in dem der jeweilige Analysewert liegt, abgebildet werden,
wobei in Schritt d) eine Expertenaussage ermittelt wird, die den mindestens zwei ermittelten Teilbereichen zugeordnet ist.

4. Verfahren nach einem der vorhergehenden Ansprüchen,
**gekennzeichnet durch** folgenden, vor Schritt a) auszuführenden Schritt:
e) Definieren mindestens einer Rechenvorschrift für die Kennzahlen von jeweils mindestens zwei Parametern.

5. Verfahren nach einem der vorhergehenden Ansprüche,
**gekennzeichnet durch** folgenden, vor Schritt a) auszuführenden Schritt
f) Zuordnen eines Wertebereichs und von Teilbereichen des Wertebereichs für das Ergebnis der mindestens einen Rechenvorschrift und/oder für die Kennzahlen mindestens eines Parameters.

6. Verfahren nach Anspruch 5,
**gekennzeichnet durch** folgenden, vor Schritt a) auszuführenden Schritt:
g) Ermitteln von Expertenaussagen entsprechend den Teilbereichen von Schritt f), insbesondere Ermitteln von Expertenaussagen, die mindestens zwei Teilbereiche betreffen.

7. Verfahren nach Anspruch 6,
**gekennzeichnet durch** folgenden, vor Schritt a) auszuführenden Schritt:
h) Zuordnen der Expertenaussagen zu den Teilbereichen von Schritt f).

8. Protokolltester (10) zum Analysieren einer zwischen mindestens zwei Instanzen (I1, I2) eines Telekommunikationsnetzes ablaufenden Kommunikation, umfassend:
- eine Vorrichtung (16) zum Ermitteln von Kennzahlen für eine Vielzahl von Parametern der zwischen den mindestens zwei Instanzen (I1, I2) ablaufenden Kommunikation;
**dadurch gekennzeichnet,**
**dass** der Protokolltester (10) weiterhin umfasst:
- eine Vorrichtung (18) zum Anwenden zumindest einer ersten Rechenvorschrift auf die Kennzahlen von mindestens zwei Parametern zur Erzeugung zumindest eines ersten Analysewerts als Ergebnis der zumindest ersten Rechenvorschrift;
- eine Vorrichtung (22) zum Abbilden zumindest des ersten Analysewerts auf einen zumindest dem ersten Analysewert zugeordneten Wertebereich, der mindestens zwei Teilbereiche aufweist, zur Ermittlung des Teilbereichs, in dem zumindest der erste Analysewert liegt; und
- eine Vorrichtung (24) zum Ermitteln einer dem ermittelten Teilbereich zugeordneten Expertenaussage.
